# EUROPÄISCHE PATENTSCHRIFT

(11) **EP 2 148 177 B1**
(45) Veröffentlichungstag und Bekanntmachung des Hinweises auf die Patenterteilung: **14.06.2017**
(21) Anmeldenummer: 09164791.7
(22) Anmeldetag: 07.07.2009
(51) Int. Cl.: G01D 5/02, G01D 3/02, G01D 3/08

(54) **Messanordnung und Verfahren zur Erfassung von Messdaten**
Measuring assembly and method for measuring variables
Agencement de mesure et procédé de saisie de données de mesure

(30) Priorität: 10.07.2008 AT 37908 U
(43) Veröffentlichungstag der Anmeldung: 27.01.2010
(73) Patentinhaber: AVL List GmbH, 8020 Graz (AT)
(72) Erfinder: Gruaz, Jerome, 8010 Graz (AT); Rzehorska, Martin, 8120 Peggau (AT); Teichmann, Rüdiger, 8075 Hart bei Graz (AT); Harms, Klaus-Christoph, 8051 Graz (AT)
(74) Vertreter: Patentanwälte Pinter & Weiss OG

(56) Entgegenhaltungen:
- EP-A1- 1 563 255
- EP-A1- 1 659 374
- WO-A1-2005/085965
- AT-U2- 7 777
- DE-C1- 4 024 402
- US-A- 5 839 094

## Beschreibung

Die gegenständliche Erfindung betrifft eine Messanordnung und ein Verfahren zur Erfassung von Messdaten mit einer Sensoreinheit wobei ein Sensorelement der Sensoreinheit mindestens eine Messgröße erfasst und die Messsignale über eine Messleitung an eine Auswerteeinheit sendet, die Auswerteeinheit eine in oder an der Sensoreinheit angeordnete Sensorkennung abfragt und aus einer Speichereinheit der Sensorkennung zugeordnete erste, den Sensor individuell kennzeichnende, sensorspezifische Daten abgerufen werden,

In Messanordnungen, insbesondere in Prüfstandsumgebungen, wie z.B. ein Prüfstand für Verbrennungsmotoren oder Antriebsstränge oder ganze Fahrzeuge, werden eine Vielzahl von Sensoren verwendet, um verschiedenste Messgrößen, wie z.B. Druck, Temperatur, etc., zu erfassen, auszuwerten und weiterzuverarbeiten. Die einzelnen Sensoren, auch des gleichen Typs und Modells, sind dabei Individuen mit unterschiedlichen Kenngrößen und Kalibrierdaten, wie z.B. Messbereichen, Empfindlichkeiten, Betriebszeiten, etc. Außerdem sind mit den Sensoren auch noch weitere Daten verknüpft, wie z.B. Seriennummer, Hersteller, Lebensdauer, etc. Eine Auswerteeinheit, die die von den Sensoren gelieferten Daten verarbeitet, muss, um korrekte Messergebnisse zu liefern, die sensorspezifischen Daten berücksichtigen und daher mit diesen Daten versorgt bzw. kalibriert werden. Ein solcher Kalibriervorgang ist, insbesondere in einer Umgebung mit vielen Sensoren, jedoch ein aufwendiger und fehleranfälliger Vorgang. Daher wurden dazu bereits einige Verbesserungen vorgeschlagen, zumindest eine selbsttätige Kalibrierung der Auswerteeinheit mit den sensorspezifischen Daten zu ermöglichen.

Aus der EP 1 302 755 B1 und der US 5,792,951 A ist es bekannt, einen Datenträger mit sensorspezifischen Daten, wie z.B. Kalibrierdaten, vom Sensorelement entfernt in einem Stecker zum Anschluss eines Kabels zur Verbindung des Sensors mit einer Auswerteeinheit anzuordnen. Um eine eindeutige und sichere Zuordnung der gespeicherten sensorspezifischen Daten zum Sensor sicherzustellen, muss der Stecker untrennbar mit dem Sensorelement verbunden sein - das Sensorelement mit Verbindungskabel und Stecker bildet somit eine untrennbare Einheit. Muss ein Sensor getauscht werden, muss folglich die gesamte Einheit getauscht werden, was wiederum erhöhte Kosten verursacht, da das Kabel und der Stecker im Betrieb normalerweise nicht beschädigt werden und folglich weiterverwendet werden könnten. Außerdem gibt es keine Garantie, dass der Datenträger im zugeordneten Stecker auch tatsächlich zum untrennbar verbundenen Sensor gehört, da auch beim festen Verbinden von Stecker mit Sensor eine Vertauschung erfolgen kann, die nachträglich nicht mehr ohne weiteres feststellbar ist.

Die EP 1 300 657 A2 wiederum beschreibt eine Anordnung, bei der im bzw. am Sensorelement eine Identifikationseinheit mit einer Sensorkennung angeordnet ist, über die die Sensoreinheit identifiziert werden kann. Die Sensorkennung kann von der Auswerteeinheit ausgelesen werden und zur Abfrage von sensorspezifischen Daten aus einer von der Sensoreinheit entfernten Speichereinheit genutzt werden. Damit sind eine eindeutige Erkennung der Sensoreinheit und die Zuordnung zu den zum Sensor hinterlegten sensorspezifischen Daten gewährleistet. Gleiches beschreibt auch die EP 1659 374 A1. Diese Zuordnung bedingt allerdings, dass die sensorspezifischen Daten auch tatsächlich in der Speichereinheit hinterlegt sind und auch richtig einer bestimmten Sensorkennung zugeordnet sind. Das erhöht einerseits den Verwaltungsaufwand, da die Speichereinheit immer aktuell gehalten werden muss. Andererseits verlagert sich die Fehlerproblematik dadurch nur von der Verkabelung zur Zuordnung der Sensorkennung zu den sensorspezifischen Daten in der Auswerte- bzw. Speichereinheit.

Eine Fehlererkennung, z.B. in der Verkabelung, in den gespeicherten Daten oder in der Datenzuordnung, ist aber bei beiden Verfahren nicht möglich. Damit verbleibt bei beiden Varianten aber ein gewisses Restfehlerrisiko, das in einer (nicht erkennbaren) Fehlmessung münden könnte.

Es ist daher eine Aufgabe der gegenständlichen Erfindung, ein Verfahren und eine Anordnung zur Messdatenerfassung mit selbsttätiger Kalibrierung einer Auswerteeinheit anzugeben, die auch eine Fehlererkennung bei der Kalibrierung bzw. bei der Zuordnung Sensor zu sensorspezifischen Daten ermöglichen.

Diese Aufgabe wird gelöst, indem die Auswerteeinheit von einem in oder an der Sensoreinheit vorgesehenen Datenträger dort gespeicherte zweite, den Sensor individuell kennzeichnende, sensorspezifische Daten abfragt, in der Auswerteeinheit die ersten und die zweiten sensorspezifischen Daten verglichen werden und die Messsignale bei Übereinstimmung der ersten und zweiten sensorspezifischen Daten unter Berücksichtung der sensorspezifischen Daten in Messdaten umgewandelt werden. Dadurch, dass die sensorspezifischen Daten doppelt vorhanden sind, kann diese Redundanz genutzt werden, um mögliche Fehler, die sich durch einen Vergleich der ersten mit den zweiten sensorspezifischen Daten offenbart, zu erkennen und anzuzeigen und somit in geeigneter Weise darauf zu reagieren.

In einer vorteilhaften Ausgestaltung ist die Sensorkennung im oder am Sensorelement angeordnet, da damit die Sensorkennung fest mit dem Sensorelement verbunden wird und damit spätere Vertauschungen unmöglich werden. Weiters kann ein Sensorelement eingesetzt werden, dass unempfindlich auch auf äußert raue Umgebungen, wie z.B. hohe Temperaturen, Drücke, aggressive Medien, etc., ist, womit eine solche Sensoreinheit sehr flexibel einsetzbar ist.

Der Datenträger wird bevorzugt außerhalb des Sensorelements, und damit außerhalb der direkten (möglicherweise rauen) Umgebung des Sensorelements, angeordnet, womit vorteilhaft gewöhnliche elektronische Bauteile eingesetzt werden können.

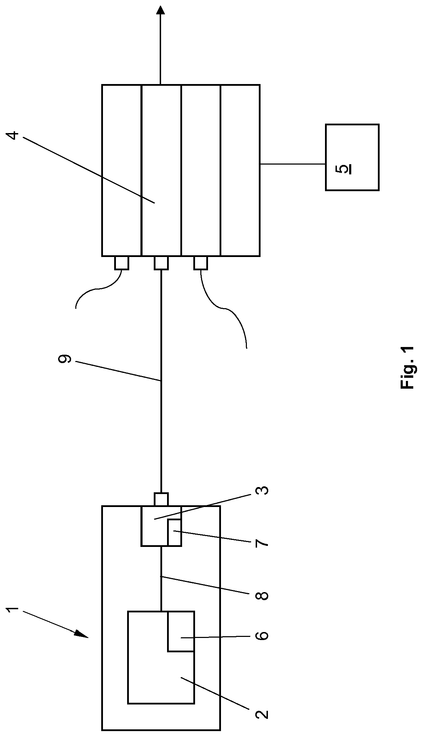

Die gegenständliche Erfindung wird nachfolgend anhand der schematischen, beispielhaften und nicht einschränkenden und vorteilhafte Ausgestaltungen zeigenden Figur 1 beschrieben, die eine bevorzugte Messanordnung zeigt.

Die Sensoreinheit 1 umfasst im Ausführungsbeispiel nach Fig. 1 ein Sensorelement 2, z.B. einen Sensor zur Aufnahme von mechanischen, elektrischen, physikalischen oder chemischen Messgrößen, und einen Sensorstecker 3 zum Anschluss einer Messleitung 9. Sensorelement 2 und Sensorstecker 3 sind durch eine Sensorleitung 8 verbunden. Vorteilhaft sind das Sensorelement 2 und der Sensorstecker 3 über die Sensorleitung 8 untrennbar miteinander verbunden, um späteren Vertauschungen von Sensorstecker 3 mit Datenträger 7 und Sensorelement 2 mit Sensorkennung 6 vorzubeugen. Der Sensorstecker 3 könnte aber genauso direkt am Sensorelement 2 angeordnet sein, womit auf die Sensorleitung 8 verzichtet werden könnte. Die vom Sensorelement 2 gelieferten und über die Messleitung 9 an eine Auswerteeinheit 4 übertragenen Messsignale werden in der Auswerteeinheit 4 in entsprechende Messdaten umgewandelt. Dabei können an einer Auswerteeinheit 4 mehrere Messkanäle vorgesehen sein, wie in Fig. 1 angedeutet, und daran in der Regel mehrere Sensoreinheiten 2 angeschlossen sein. Die Auswerteeinheit 4 kann die Messdaten an eine übergeordnete Verarbeitungseinheit, z.B. eine zentrale Prüfstandssteuerung, liefern, wie in Fig. 1 durch den Pfeil angedeutet.

Im bzw. am Sensorelement 2 ist eine Sensorkennung 6 angeordnet, die das Sensorelement 2 individuell und eindeutig kennzeichnet. Die Sensorkennung 6 kann unterschiedlich ausgestaltet sein. Z.B. kann diese bei Ausbildung des Sensorelements 2 als piezoelektrischer Messwertaufnehmer vom piezoelektrischen Element selbst gebildet werden. Unter Ausnutzung des inversen Piezoeffektes kann das piezoelektrische Element als Schwingelement betrieben werden, dessen Resonanzspektrum zur Sensoridentifikation dienen kann. Möglichkeiten und konkrete Ausführungen für derartige Resonanzanregungen und -auswertungen sind dabei beispielsweise aus CH 657 457 A5, AT 387 286 B oder auch AT 393 416 B bekannt. Hier bevorzugt sind naturgemäß Anordnungen, bei denen die üblicherweise für den normalen Messbetrieb verwendeten Anschlusskabel bzw. Messleitungen auch gleichzeitig zur Abfrage der Sensorkennung 6 des Sensorelements 2 Verwendung finden können. In bevorzugter Weise kann dabei durch konstruktive Maßnahmen das Schwingverhalten des Sensorelements 2 individuell gestaltet werden, sodass die Sensorkennung 6 trennschärfer wird. Dies kann z.B. durch Gestaltung des Sensorelementes bzw. seiner Umgebung selbst oder durch gezielte Ausgestaltung eines oder mehrerer zusätzlicher Schwingelemente geschehen. Nach einer anderen bevorzugten Ausgestaltung kann die Sensorkennung 6 als akustisches Oberflächenwellen-Element ausgestaltet sein, das über einen Hochfrequenzimpuls beaufschlagbar ist und als Antwort die als Sensoridentifikation dienenden Signale liefert. Dabei wird die auf der Oberfläche eines piezoelektrischen Materials angeregte Welle durch Anbringung, Schaltung oder Impedanzbelastung von Wandlern oder Reflektoren so beeinflusst, dass aus der Antwort des Elementes auf den Hochfrequenzimpuls Informationen, beispielsweise ein einfacher Identifikationscode, entnommen werden kann. Eine derartige Anordnung ist an sich beispielsweise in DE 44 05 647 A beschrieben und für die einmalige, wiederholt abfragbare Speicherung einer beschränkten Anzahl von Bits geeignet. Derartige Elemente arbeiten rein passiv, wobei die hohe Frequenz (typischerweise im Bereich von über 400 MHz) eine effiziente induktive Ankopplung ohne Wechselwirkung mit Mess- und Resonanzfrequenzen erlaubt. Als piezoelektrisches Substrat für diese OberflächenwellenElemente kann beispielsweise Quarz, GaPO₄ oder Langasit verwendet werden. In besonders bevorzugter Ausgestaltung der Erfindung kann auch unmittelbar ein piezoelektrisches Mess-element selbst als Substrat für das Oberflächenwellen-Element dienen. Nach einer weiteren bevorzugten Ausgestaltung der Erfindung kann die Sensorkennung 6 des Sensorelements 2 auch als Schwingelement ausgeführt sein, das elektrisch zu mechanischen Schwingungen mit unterschiedlichen Resonanzfrequenzen anregbar ist, wobei das über eine Variation der Anregefrequenz abfragbare Muster an Resonanzfrequenzen zur Sensoridentifikation dient. Es gibt dabei also eine mechanisch schwingfähige Struktur im Sensorelement 2 mit einer gewissen Zahl von elektrisch anregbaren Elementen, beispielsweise eine Art Kammstruktur aus Piezo-Kristall/Keramik, wobei jede einzelne schwingfähige Zunge entweder eine oder auch mehrere Resonanzfrequenzen haben kann. Die Eigenfrequenzen dieser Elemente liegen bevorzugt naturgemäß in einem Bereich, der für die Messung nicht benötigt bzw. von der sonstigen Sensorstruktur auch nicht verfälscht oder beeinflusst wird. Die anregbaren Schwingelemente zeigen bei Anregung mit ihrer Eigenfrequenz deutliche Resonanzüberhöhungen, was als Muster zur Sensoridentifikation erkannt werden kann. Auch diese Realisierung der Sensorkennung 6 im Sensorelement 2 ist in rauer Umgebung ohne weiteres unbeeinflusst verwendbar. Die Sensorkennung 6 kann in anderer Weiterbildung der Erfindung aber auch als eine passive elektrische Komponente, vorzugsweise ein elektrischer Widerstand von bekanntem Wert, ausgestaltet sein, deren abfragbarer Wert zur Sensoridentifikation dient. Passive elektrische Komponenten, wie etwa die genannten Widerstände oder auch Kondensatoren, Induktivitäten, Wellenleiterstücke oder komplex verschaltete Impedanzen, vertragen ohne weiteres auch höhere Temperaturen oder sonstige widrige Umgebungseinflüsse und ermöglichen zumindest eine einfache Sensoridentifikation, wie dies für viele Zwecke ausreichend ist. Neben den oben genannten Möglichkeiten zur Umsetzung einer Sensorkennung 6, gibt es natürlich noch eine Reihe anderer geeigneter, hier nicht aufgeführter Ausgestaltungen, die ebenfalls in der erfindungsgemäßen Anordnung Anwendung finden könnten.

Die Sensorkennung 6 kann von der Auswerteeinheit 4 über die Messleitung 9, oder gegebenenfalls über eine eigenen Datenleitung, abgefragt werden. Dazu kann die Messleitung 9, und gegebenenfalls auch die Sensorleitung 8, über mehrere Leiter verfügen, z.B. ein Masseleiter und/oder ein oder mehrere Leiter für das Messsignal und/oder ein oder mehrere Leiter für die Abfrage der Sensorkennung 6. Die abgefragte Sensorkennung 6 kann nun verwendet werden, um aus einer mit der Auswerteeinheit 4 verbundenen (z.B. direkt über ein Datenkabel oder indirekt über ein Netzwerk) Speichereinheit 5 der Sensorkennung 6 zugeordnete erste sensorspezifische Daten, wie z.B. den Messbereich, die Resonanzcharakteristik, die Temperaturdrift, die Sensorempfindlichkeit, Betriebszeiten bzw. Vorschädigungen, Daten über die Kalibrierung, und ähnliche Daten, die jeden derartigen Sensor individuell kennzeichnen und die sich im Laufe der Sensorlebensdauer auch ändern können, abzurufen. Damit kann die Auswerteeinheit 4 entsprechend parametrisiert bzw. kalibriert werden, womit eine korrekte Umwandlung der Messsignale vom Sensorelement 2 in die gesuchten Messdaten möglich wird.

Um sicherzustellen, dass die abgefragten und der Sensorkennung 6 zugeordneten sensorspezifischen Daten auch tatsächlich zum angeschlossenen Sensorelement 2 gehören, ist an der Sensoreinheit 1 zusätzlich ein Datenträger 7, z.B. ein EEPROM, angeordnet, auf dem die sensorspezifischen Daten des Sensorelements 2 gespeichert sind. Im Ausführungsbeispiel nach der Fig. 1 ist der Datenträger 7 im Sensorstecker 3 angeordnet. Der Datenträger 7 kann aber natürlich auch an einer anderen Stelle der Sensoreinheit 1, z.B. in der Sensorleitung 8 oder auch direkt am Sensorelement 2, angeordnet sein. Der Datenträger 7 kann nun ebenfalls über die Messleitung 9, bzw. ein eigenes Datenkabel, und gegebenenfalls über die Sensorleitung 8, von der Auswerteeinheit 4 ausgelesen werden. Die Auswerteeinheit 4 erhält somit zweite sensorspezifische Daten, die im fehlerfreien Fall mit den ersten sensorspezifischen Daten übereinstimmen und die in der Auswerteeinheit 4 mit den ersten, von der Speichereinheit 5 gelieferten, sensorspezifischen Daten verglichen werden können. Dazu kann es z.B. bereits ausreichend sein, wenn nur ein Teil der ersten und zweiten sensorspezifischen Daten, z.B. eine Hersteller- oder Seriennummer, miteinander verglichen werden. D.h., dass auf dem Datenträger nicht zwingend alle für die korrekte Messung benötigen sensorspezifischen Daten gespeichert sein müssen. Nur wenn die ersten und zweiten sensorspezifischen Daten übereinstimmen, wird die Auswerteeinheit 4 mit den Daten kalibriert bzw. parametrisiert und die Messsignale vom Sensorelement 2 in der Auswerteeinheit 4 unter Berücksichtigung der sensorspezifischen Daten in die gesuchten Messdaten umgewandelt. Falls der Vergleich Unterschiede in den sensorspezifischen Daten ergibt, dann ist davon auszugehen, dass in der Messanordnung ein Fehler vorliegt, z.B. eine falsche Zuordnung des Sensorelements 2 zum Datenträger (z.B. nach einem Austausch und damit verbundener Neuverkabelung) oder ein falscher zur Sensorkennung 6 gespeicherter Datensatz in der Speichereinheit 5 oder der Empfang einer korrumpierten Sensorkennung. Die im Messsystem, bzgl. der sensorspezifischen Daten, vorhandene Redundanz ermöglicht jedoch solche Fehler zumindest zu erkennen. Im Fehlerfall kann dann von der Auswerteeinheit 4 ein entsprechendes Fehlersignal generiert und an einer geeigneten Stelle ausgegeben werden, z.B. ein Alarmsignal am Bildschirm der Steuerzentrale des Prüfstandes auf das das Bedienpersonal reagieren kann. Auf diese Weise können Fehlmessungen erkannt und auch auf eine bestimmte Messkette (Sensorelement - Sensorleitung/Messleitung - Auswerteeinheit) eingegrenzt werden. Angesichts der Tatsache, dass es in einer üblichen Anwendung eine Vielzahl von Sensorelementen und auch Auswerteeinheiten geben kann, stellt das schon eine erhebliche Verbesserung der derzeitigen Möglichkeiten, Fehler zu erkennen und zu finden, dar.

Von der gezeigten Anordnung der einzelnen Teile der Messanordnung sind natürlich viele Abwandlungen denkbar. Z.B. kann die Speichereinheit 5 auch in der Auswerteeinheit 4 oder in der Messleitung 9 angeordnet sein, der Datenträger 7 kann im oder am Sensorelement 2 angeordnet sein, die Sensorkennung 6 kann außerhalb des Sensorelements 2 angeordnet sein (z.B. im Bereich der Sensorleitung 8 oder ebenfalls im oder am Sensorstecker 3), etc.

Ebenso ist es denkbar, dass über die eindeutige Sensoridentifikation auch eine ganze Messkonfiguration überprüft werden kann. Es ist z.B. möglich, aufzuzeichnen, an welchem Messkanal welcher Auswerteeinheit 4 welche Sensoreinheit 1 angeschlossen ist bzw. sein sollte. Dies kann verwendet werden, um die Messkonfiguration graphisch darzustellen, z.B. auf einem Bildschirm der Prüfstandssteuerung. Ebenso kann auf diese Weise jede Änderung in der Messkonfiguration automatisch (z.B. durch zyklische Abfrage der Konfiguration) erkannt und dargestellt werden. Auch ist eine selbsttätige Verifizierung einer vorgegebenen Messkonfiguration, z.B. nach dem Aufbau eines Prüfstandes nach einer bestimmten Vorgabe, möglich.

## Patentansprüche

1. Messanordnung zur Erfassung von Messdaten mit einer Sensoreinheit (1), deren Sensorelement (2) Messsignale liefert, und einer daran mit einer Messleitung (9) verbundenen Auswerteeinheit (4), die die Messsignale in Messdaten umwandelt, wobei in oder an der Sensoreinheit (1) eine Sensorkennung (6) angeordnet ist, die von der Auswerteeinheit (4) abfragbar ist, und mit einer Speichereinheit (5), in der der Sensoreinheit (1) über die abgefragte Sensorkennung (6) zugeordnete erste, den Sensor (1) individuell kennzeichnende, sensorspezifische Daten gespeichert sind, die von der Auswerteeinheit (4) auslesbar sind, und in oder an der Sensoreinheit (1) ein Datenträger (7) vorgesehen ist, auf dem zweite, den Sensor (1) individuell kennzeichnende, sensorspezifische Daten gespeichert sind, die von der Auswerteeinheit (4) auslesbar sind, **dadurch gekennzeichnet, dass** die zweiten sensorspezifischen Daten mit den ersten sensorspezifischen Daten der Speichereinheit (5) in der Auswerteeinheit (4) vergleichbar sind und die Auswerteeinheit (4) bei Übereinstimmung der ersten und zweiten sensorspezifischen Daten die Messsignale unter Berücksichtigung der sensorspezifischen Daten in Messdaten umwandelt.

2. Messanordnung nach Anspruch 1, **dadurch gekennzeichnet, dass** die Sensorkennung (6) im oder am Sensorelement (2) der Sensoreinheit (1) angeordnet ist.

3. Messanordnung nach Anspruch 1 oder 1, **dadurch gekennzeichnet, dass** in der Sensoreinheit (1) ein Sensorstecker (3) vorgesehen ist und der Datenträger (7) im oder am Sensorstecker (3) angeordnet ist.

4. Verfahren zur Erfassung von Messdaten, wobei ein Sensorelement (2) einer Sensoreinheit (1) mindestens eine Messgröße erfasst und die Messsignale über eine Messleitung (9) an eine Auswerteeinheit (4) sendet, die Auswerteeinheit (4) eine in oder an der Sensoreinheit (1) angeordnete Sensorkennung (6) abfragt und aus einer Speichereinheit (5) der Sensorkennung (6) zugeordnete erste, den Sensor (1) individuell kennzeichnende, sensorspezifische Daten abgerufen werden, **dadurch gekennzeichnet, dass** die Auswerteeinheit (4) von einem in oder an der Sensoreinheit (1) vorgesehenen Datenträger (7) dort gespeicherte zweite, den Sensor (1) individuell kennzeichnende, sensorspezifische Daten abfragt, in der Auswerteeinheit (4) die ersten und die zweiten sensorspezifischen Daten verglichen werden und die Messsignale bei Übereinstimmung der ersten und zweiten sensorspezifischen Daten unter Berücksichtung der sensorspezifischen Daten in Messdaten umgewandelt werden.

## Claims

1. A measuring arrangement for detecting measurement data with a sensor unit (1) whose sensor element (2) delivers measurement signals, and an evaluation unit (4) connected thereto with a measuring line (9), which evaluation unit (4) converts the measurement signals into measurement data, wherein a sensor identifier (6) is arranged in or on the sensor unit (1) that can be polled by the evaluation unit (4), and with a memory unit (5) in which first sensor-specific data that identify the sensor (1) individually are stored that are associated via the polled sensor identifier to the sensor unit (1) and can be read out by the evaluation unit (4), and wherein a data carrier (7) is provided in or on the sensor unit (1) on which second sensor-specific data are stored that identify the sensor (1) individually and can be read out by the evaluation unit (4), **characterized in that** the second sensor-specific data can be compared with the first sensor-specific data of the storage unit (5) in the evaluation unit (4) and, when the first and second sensor-specific data match, the evaluation unit (4) converts the measurement signals into measurement data in consideration of the sensor-specific data.

2. The measuring arrangement as set forth in claim 1, **characterized in that** the sensor identifier (6) is arranged in or on the sensor element (2) of the sensor unit (1).

3. The measuring arrangement as set forth in claim 1 or 2, **characterized in that** a sensor connector (3) is provided in the sensor unit (1), and the data carrier (7) is arranged in or on the sensor connector (3).

4. A method for detecting measurement data, wherein a sensor element (2) of a sensor unit (1) detects at least one measured quantity and transmits the measurement signals via a measuring line (9) to an evaluation unit (4), the evaluation unit (4) polls a sensor identifier (6) arranged in or on the sensor unit (1), and first sensor-specific data associated with a memory unit (5) of the sensor identifier (6) are called up which identify the sensor (1) individually, **characterized in that** the evaluation unit (4), from a data carrier (7) provided in or on the sensor unit (1), polls second sensor-specific data stored there which identify the sensor (1) individually, the first and the second sensor-specific data are compared in the evaluation unit (4), and, if the first and second sensor-specific data match, the measurement signals are converted into measurement data in consideration of the sensor-specific data.

## Revendications

1. Agencement de mesure pour la saisie de données de mesure avec une unité de détection (1), dont l'élément détecteur (2) fournit des signaux de mesure, et une unité d'évaluation (4) qui y est raccordée à une ligne de mesure (9) et qui convertit les signaux de mesure en données de mesure, dans lequel est agencée, dans ou sur l'unité de détection (1), une clé de détection (6) qui peut être interrogée par l'unité d'évaluation (4), et avec une unité de mémorisation (5), dans laquelle sont mémorisées des premières données spécifiques au détecteur affectées à l'unité de détection (1) via la clé interrogée (6) et caractérisant le détecteur (1) individuellement, lesquelles données peuvent être lues par l'unité d'évaluation (4), et il est prévu dans ou sur l'unité de détection (1) un support de données (7) sur lequel des secondes données spécifiques au détecteur caractérisant individuellement le détecteur (1), qui peuvent être lues par l'unité d'évaluation (4), **caractérisé en ce que** les secondes données spécifiques au détecteur peuvent être comparées aux premières données spécifiques au détecteur de l'unité de mémorisation (5) dans l'unité d'évaluation (4) et l'unité d'évaluation (4), lorsque les premières et les secondes données spécifiques au détecteur concordent, convertit les signaux de mesure en données de mesure en tenant compte des données spécifiques au détecteur.

2. Agencement de mesure selon la revendication 1, **caractérisé en ce que** la clé de détection (6) est agencée dans ou sur l'élément détecteur (2) de l'unité de détection (1).

3. Agencement de mesure selon la revendication 1 ou 1, **caractérisé en ce qu'**il est prévu dans l'unité de détection (1) une prise de détecteur (3) et le support de données (7) est agencé dans ou sur la prise de détecteur (3).

4. Procédé de saisie de données de mesure, dans lequel un élément détecteur (2) d'une unité de détection (1) saisit au moins une grandeur de mesure et envoie les signaux de mesure via une ligne de mesure (9) à une unité d'évaluation (4), l'unité d'évaluation (4) interroge une clé de détection (6) agencée dans ou sur l'unité de détection (1) et des premières données spécifiques au détecteur affectées à la clé de détection (6) et caractérisant le détecteur (1) individuellement sont prélevées d'une unité de mémorisation (5), **caractérisé en ce que** l'unité d'évaluation (4) interroge des secondes données spécifiques au détecteur mémorisées par un support de données (7) prévu dans ou sur l'unité de détection (1) et caractérisant individuellement le détecteur (1), les premières et les secondes données spécifiques au détecteur sont comparées dans l'unité d'évaluation (4) et les signaux de mesure sont convertis en données de mesure en tenant compte des données spécifiques au détecteur lorsque les premières et les secondes données spécifiques au détecteur concordent.
